Europäisches Patentamt

European Patent Office

Office européen des brevets

(11) Publication number: **0 194 316 B1**

# EUROPEAN PATENT SPECIFICATION

(45) Date of publication of patent specification: **11.11.92**  (51) Int. Cl.5: **G05B 19/403**

(21) Application number: **85904284.8**

(22) Date of filing: **29.08.85**

(86) International application number:
**PCT/JP85/00476**

(87) International publication number:
**WO 86/01618 (13.03.86 86/06)**

(54) **METHOD OF PREPARING NC DATA.**

(30) Priority: **03.09.84 JP 184231/84**

(43) Date of publication of application:
**17.09.86 Bulletin 86/38**

(45) Publication of the grant of the patent:
**11.11.92 Bulletin 92/46**

(84) Designated Contracting States:
**DE FR GB**

(56) References cited:
**EP-A- 0 087 948      EP-A- 0 092 977
EP-A- 0 137 047      EP-A- 0 139 761
JP-A-58 149 581      JP-A-58 184 608**

**COMPUTER DESIGN, vol. 12, no. 5, 1973 ;
page 46, Concord, USA : "Computer converts sketches into completed drawings".**

**NEW HORIZONS FOR MANUFACTURING,
PROCEEDINGS OF NUMERICAL CONTROL
SOCIETY, 16th annual meeting and technical
conference, 1979, N.C.S., Spring Lake, USA ;**

**D.C. Beran : "Numerical control programming via computer graphics", pages 56-58.**

(73) Proprietor: **FANUC LTD.
3580, Shibokusa Aza-Komanba, Oshino-mura
Minamitsuru-gun, Yamanashi 401-05(JP)**

(72) Inventor: **KISHI, Hajimu Hino Hirayamadai
Jutaku 1104
7-8, Asahigaoka 6-chome
Hino-shi Tokyo 191(JP)**
Inventor: **TANAKA, Kunio
8-13, Tamakawa-cho 5-chome
Akishima-shi Tokyo 196(JP)**

(74) Representative: **Billington, Lawrence Emlyn et
al
HASELTINE LAKE & CO Hazlitt House 28
Southampton Buildings Chancery Lane
London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an NC data creation method and, more particularly, to an NC data creation method for creating NC data by using a tablet device.

There is an NC data creation apparatus in which points or figures on a drawing placed upon a tablet surface are inputted by a tablet device and the input data are used to create NC data. An example of such an apparatus is disclosed in EP-A-0087948. With such an apparatus, NC data are created in the following manner. As shown in Fig. 6, assume that a tool is to be moved from a reference point $P_r$ (where $P_{100}$ is the point obtained by projecting the reference point on the XY plane), to a point $P_1'$ in a rapid-traverse mode, thereafter to an approach point $P_a$ at a velocity F0100 (where F is a word address indicating feedrate) and at a spindle rotational velocity S1500 (where S is a word address indicating spindle rotational velocity), thence to a machining starting point $P_1$ at a cutting velocity F0050 while the spindle is rotating, thereafter to the point $P_1$ along straight lines $S_1 \rightarrow S_2 \rightarrow S_3 \rightarrow S_4$ at the abovementioned cutting velocity (F0050) and spindle rotational velocity (S1500), and then, upon completion of machining, is retracted in the rapid-traverse mode along the path $P_1 \rightarrow P_1'$, after which the tool is positioned at the next point in a similar manner so that NC machining may be performed in successive fashion. Further, assume that the drawing depicts a part profile in the XY plane.

The drawing depicting the part profile is placed on the tablet surface of the tablet device.

Under these conditions, a "Starting Point Designation" area of a menu affixed to the tablet surface is designated, after which the positional coordinate values of the point $P_{100}$ are entered by using a coordinate designator. This creates NC data

    G92 X0. Y0. Z50.;

for setting the coordinate system. The position of $P_r$ along the X axis is assumed to have been entered by a separate keyboard.

Next, creation of absolute data is declared by designating an "Absolute" area on the menu, a "Positioning" area is designated and then positional coordinate values of the machining starting point $P_1$ are entered by the coordinate designator. This creates positioning data

    G91 G00 X$x_1$ Y$y_1$;

from the point $P_r$ to the point $P_1'$.

Thereafter, a "Keyboard" area on the menu is designated end the following NC data for approach are entered from a keyboard:

    G01 Z-40. F0100 S1500;
    Z-10. F0050;

Next, if a "Point Sequence Input" area on the menu is designated followed by moving the coordinate designator along the machining path, the positional coordinate values of points on the machining path are successively sampled at a predetermined sampling pitch to automatically create NC data for feeding the tool in the cutting mode along line segments connecting the sampling points. If the machining path is a straight line or a circular arc, the machining path can be specified by designating a "Straight Line Input" or "Circular Arc Input" on the menu.

After the NC data for moving the tool along the machining path $S_1 \rightarrow S_2 \rightarrow S_3 \rightarrow S_4$ are created, the "Keyboard" area on the menu is designated and the following NC data for retraction are entered from the keyboard:

    G00 Z50.;

The foregoing processing is subsequently repeated in successive fashion to create NC data for machining the desired part.

It will be understood from the foregoing that the tablet device enables the positional coordinate values of points to be entered by designating the points using a coordinate designator, and enables a graphic to be entered by moving the coordinate designator along the graphic.

However, the points and graphics which can be entered are points and graphics on a predetermined plane (XY plane); positions along the Z axis cannot be entered. Consequently, NC data for specifying tool movement along the Z axis, e.g. NC data for approach and NC data for retraction, cannot be generated automatically by the tablet device, so that these items of data must be entered one at a time from the keyboard.

The operation for entering approach or retraction NC data from the keyboard is troublesome. In addition, if a large number of approach and retraction motions are necessary for machining a single part, to some extent approach and retraction NC data must entered each time, thereby complicating operation even further. Accordingly, the time required for NC data creation is prolonged and data input errors readily occur.

An object of the present invention is to provide an NC data creation method through which NC data inclusive of motion along the Z axis, such an approach NC data and retraction NC data, can be created without manipulating a keyboard once the data have been registered.

According to the present invention there is provided an NC data creation method in which a prescribed area of a menu fixed to a tablet surface of a tablet device is designated by using a coordinate designator, thereby specifying whether data such as rapid-traverse data, linear cutting data and circular arc cutting data are to be created, turning on a switch mounted on the coordinate designator to enter coordinate values of points on a drawing designated by the coordinate designator, creating prescribed NC data for any of rapid traverse, linear cutting and circular arc cutting by using said entered coordinate values, and registering a plurality of macros in advance for creating different sets of NC data, characterised by:

storing a correlation between each macro and conditions for calling the macro, one of the conditions being operation of the switch, calling a prescribed macro by operating said switch when other conditions have been satisfied, and creating NC data including motion along a Z axis such as approach NC data and retraction NC data by using the prescribed macro.

For example, to specify a machining path after the creation of NC data for positioning, a point sequence input mode is selected, points on a drawing are designated by the coordinate designator and a switch for a point sequence input is turned from off to on, whereupon a predetermined macro including NC data for approach is called and appended to the end of NC data created by the operations performed thus far. If the point sequence input switch is turned from on to off after the machining path is specified, a macro inclusive of NC data for retraction is called and appended to the end of NC data created thus far. The use of previously stored macros is known in the art. Thus see for example EP-A-0092977, which employs macros for other purposes.

Brief Description of the Drawings

Fig. 1 is a block diagram of an NC data creation apparatus to which the present invention is applied;

Fig. 2 is an external view of the NC data creation apparatus;

Fig. 3 is a view showing the construction of a cursor of a tablet device;

Fig. 4 is a view for describing a menu used in the tablet;

Fig. 5 is a flowchart of processing according to the present invention; and

Fig. 6 is a view useful is describing the prior art as well as the NC data creation method of the present invention.

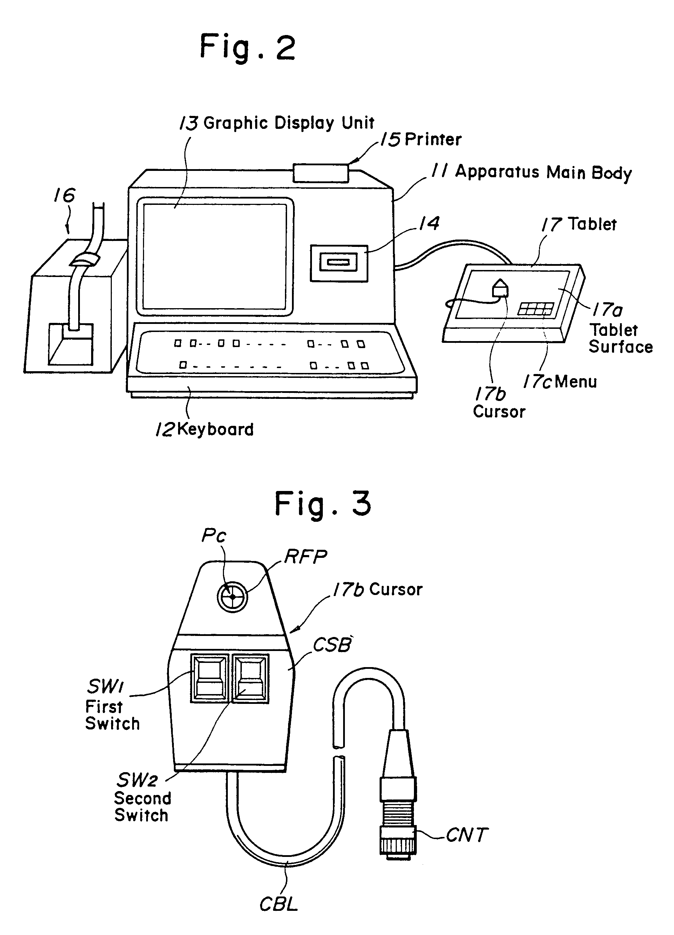

Fig. 2 is an external view of an NC data creation apparatus having a tablet. In the Figure, numeral 11 denotes the main body of the apparatus, 12 a keyboard having a number of keys, 13 a graphic display unit, 14 a cassette magnetic tape device (or a floppy disc unit), 15 a printer, 16 a paper tape reader/puncher, and 17 a tablet device. The apparatus main body 11 has a control unit, not shown, constituted by a microcomputer which executes processing for input/output, for digitizing and for the creation of NC data, by means of the tablet 17 on the basis of a system program stored previously in a RAM, as will be set forth later. The keyboard 12 has a number of keys and is used for designating jobs through a conversational operation, for designating system program loading, for entering NC data, etc. The graphic display 13 displays input graphics, input data, coordinate values, NC data and various messages needed for conversational operation. The cassette magnetic tape 14 is used to enter the system program, which is stored on a cassette tape (not shown), into the RAM of the apparatus main body 11. By way of example, when using the tablet device to enter coordinate, values directly from a drawing and to create NC data, the system program for digitizing processing, which is contained in the cassette magnetic tape, must be fed into the RAM of the apparatus main body. The printer 15 prints out characters which appear on the screen of the graphic display unit 13, the contents punched in a paper tape, and information which has been written into the magnetic tape. The paper tape reader/puncher 16 creates an NC tape by punching a paper tape with the prepared NC data, or reads NC or other data which have already been punched into an NC tape. By relying upon a cursor 17b, the tablet device 17 inputs positions on a drawing, which is laid on the tablet surface 17a, into the apparatus main body 11. The tablet device 17 also enters information necessary for NC data creation in response to designation of a predetermined area on a menu 17c affixed to the tablet surface 17a.

Fig. 3 is an enlarged view off the cursor 17b, which has a cursor body CSB, first and second switches SW1, SW2, a reading focal point RFP, a connector CNT and a cable CBL. To enter coordinates, the intersection Pc of the cross hairs provided on the reading focal point RFP is aligned with a point on a drawing that is desired to be entered, followed by depressing the first switch SW1 or second switch SW2.

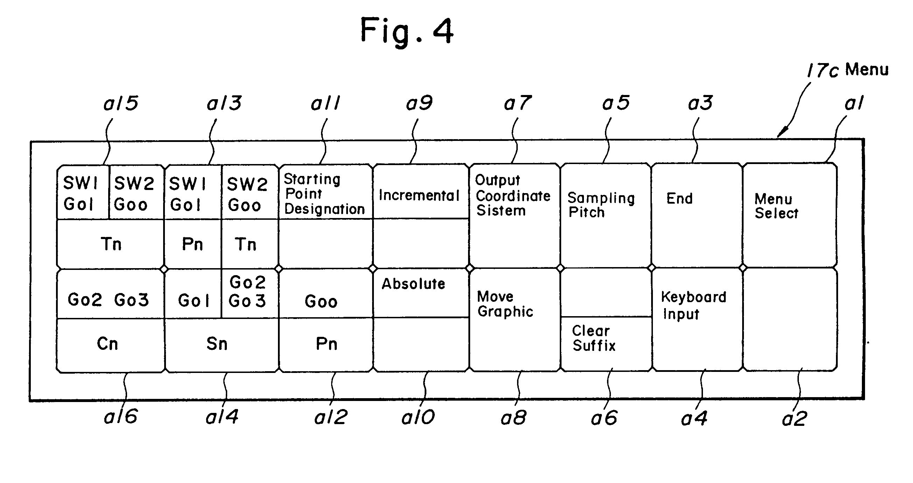

The tablet device 17 has the capability of recognizing the positions of points designated on the tablet surface. Accordingly, the tablet device 13 can be provided with an item input function if a portion of the tablet surface is divided into a plurality of areas and each area is assigned an item name. The menu 17c shown in Fig. 4 is affixed to the tablet surface 17a and (1) NC data for rapid traverse (positioning), (2) NC data for linear cutting, and (3) NC data for circular arc cutting can be created by designating areas $a_1$ - $a_{16}$ on the menu or by using designated point data. Specifically, the menu 17c is divided into areas of from $a_1$ to $a_{16}$, and the areas are designated in the following cases:

(1) Area $a_1$ is designated when the menu is selected.

(2) Area $a_3$ is designated when processing is ended.

(3) A keyboard input area $a_4$ is designated when data are entered from the keyboard.

(4) A sampling pitch area $a_5$ is designated when a sampling pitch is specified at the entry of a point sequence.

(5) Entered points, straight lines and circular arcs are assigned suffix numbers successively starting from 1. A suffix clear area $a_6$ is designated when these suffix numbers are cleared.

(6) An incremental area $a_9$ is designated when NC data are created by an incremental command.

(7) An absolute area $a_{10}$ is designated when NC data are created by an absolute command.

(8) A starting point designation area all is designated when a starting point is specified.

(9) A G00 area $a_{12}$ is designated when positioning data are created. Specifically, if the first switch SW1 or second switch SW2 is turned from off to on after the G00 area $a_{12}$ is designated, positioning data are created for moving the tool in the rapid-traverse mode to a position being designated by the cursor.

(10) A G00/G01 area $a_{13}$ is designated when cutting data or positioning data along a series of points are created. Specifically, if the first switch SW1 is turned from off to on after the G01/G00 area $a_{13}$ is designated, NC data are created for moving the tool in a linear cutting feed mode to a position being designated by the cursor. If the second switch is turned on instead of the first switch, NC data are created for successively moving the tool in the rapid-traverse mode along a series of points sampled at a predetermined pitch by subsequently moving the cursor.

(11) A G01/G02 area $a_{14}$ is designated when linear cutting data or circular arc cutting data are entered. That is, if two points are designated by the cursor and the first switch is turned from off to on at each point after the G01/G02 area $a_1$ is designated, cutting data indicative of a straight line connecting these two points are created. If three points are designated by the cursor and the second switch is turned from off to on at each point after the G01/G02 area $a_1$ is designated, cutting data indicative of a circular arc through the three designated points are created.

(12) The area $a_{15}$ is designated when positioning data or cutting data along a series of points are created. Specifically, after the area $a_{15}$ is designated, NC data are created for moving the tool in the cutting feed mode along a series of points sampled at a predetermined pitch by turning on the first switch and moving the cursor. If the second switch is turned on instead of the first switch, NC data are created for rapid traverse along the series of points.

(13) A G02/G03 area $a_{16}$ is designated when circular arc cutting data are created.

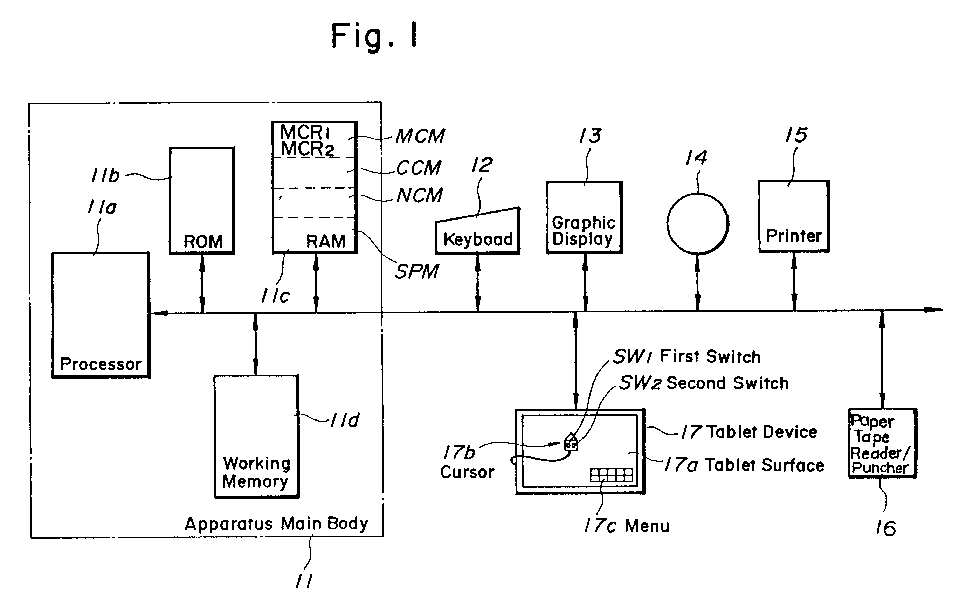

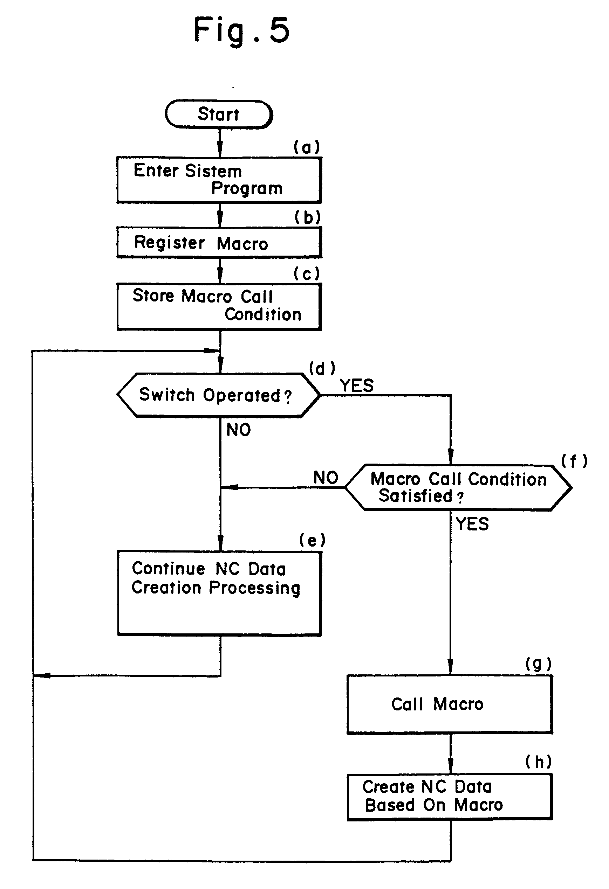

Fig. 1 is a block diagram of an NC data creating apparatus to which the present invention is applied, and Fig. 5 is a flowchart of processing.

In Fig. 1, portions similar to those shown in Fig. 2 are designated by like reference characters. Numeral 11a denotes a processor, 11b a ROM, 11c a RAM, and 11d a working memory.

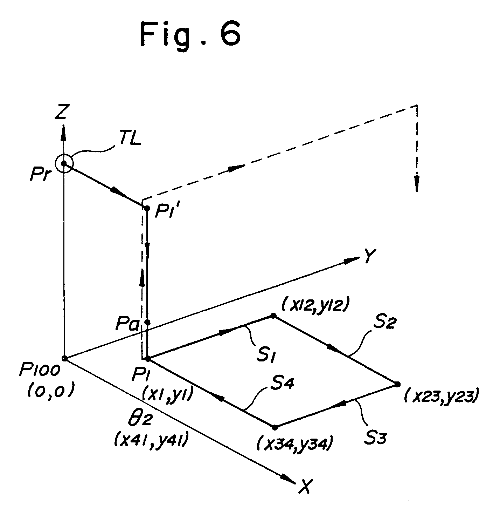

If NC data specifying the tool path shown in Fig. 6 are to be created, then

(1) a first macro MCR1 having NC data for approach and a second micro MCR2 having NC data for retraction are registered beforehand in a macro storage area MCM of the RAM 11c, and

(2) a correlation between each macro and conditions for calling each macro is stored beforehand in a call condition storage area CCM of the RAM 11c.

The first micro MCR1 is

G01 Z-40. F0100 S1500;

Z-10. F0050;

and the second macro MCR2 is

G00 Z50.;

By way of example, the correlation between each macro and the macro call conditions is as follows:

The condition for calling the first micro MCR1 is that switch SW1 be turned from off to on after the area $a_{15}$ of the menu 17c is designated.

The condition for calling the second micro MCR2 is that switch SW1 be turned from on to off after the area $a_{15}$ of the menu 17c is designated.

A method of creating NC data according to the present invention will now be described with reference to the flowchart of Fig. 5.

(a) A prescribed system program is tanken from a magnetic tape and stored in a system program storage area SPM of the RAM 11c in the apparatus main body 11.

(b) Next, the macros MCR1, MCR2 are entered from the keyboard 12 and stored in the micro storage area MCM of the RAM 11c.

(c) The conditions for calling the macros MCR1, MCR2 are entered from the keyboard 12 and are stored in the call condition storage area CCM of RAM 11c. Note that step (b) can be deleted if the apparatus has a non-volatile memory and the macros and macro call conditions are stored in the non-volatile memory.

Thereafter, such operations as selection of a prescribed area on the menu 17c, control of the movement of cursor 17b on the drawing and on/off manipulation of the switches SW1, SW2 are performed to successively create NC data.

(d) It is checked whether the prescribed switch has been manipulated (turned on or off) in the process of creating the NC data.

(e) If the switch has not been manipulated, NC data creation processing similar to that of the prior art is continued and the processing of steps (d), (e) is subsequently repeated.

(f) If the first or second switch is manipulated at step (d), the processor 11a checks whether a macro call condition is satisfied. If the macro call condition is not satisfied, the processing of step (e) is executed.

(g) If the macro call condition is satisfied, the processor 11a reads the prescribed macro out of the macro storage area MCM of RAM 11c.

(h) Next, the macro is placed at the end of NC data created thus far and stored in an NC data storage area NCM of RAM 11c.

Thereafter, the foregoing processing is repeated to eventually complete the creation of the desired NC data.

Let us now describe a specific case in which NC data along the path shown in Fig. 6 are created.

(1) First, the "Menu Select" area $a_1$ and "Starting Point Designation Area" $a_{11}$ on the menu 17c are designated by the cursor 17b, after which the cross-hair intersection $P_c$ of cursor 17b is positioned at the point $P_{100}$ on the drawing and either the first switch SW1 or second switch SW2 is turned on. The following NC data for setting the coordinate system are thus created and stored in the NC data storage area NCM of RAM 11c:

G92 X0. Y0. Z50.;     (A)

(2) Next, the "Menu Select" area $a_1$ and "Absolute" area $a_{10}$ on menu 17c are designated to declare the creation of absolute data, the "Menu Select" area $a_1$ and the "G00" area $a_{12}$ are designated, the cross-hair intersection $P_c$ of the cursor is then positioned at the point $P_1$ on the drawing, and either the first or second switch is turned from on to off. The following positioning data from point $P_r$ to point $P_1'$ are thus created:

G91 G00 X$x_1$ Y$y_1$;     (B)

(3) Thereafter, in order to enter a series of points on a cutting path, the "Menu Select" area $a_1$ and the "G01/G00 (point sequence)" area $a_1$ are designated by the cursor 17b and the first switch SW1 is turned from off to on.

(4) The processor 11a checks whether a macro call condition has been satisfied owing to manipulation of a switch. Since the condition for calling the first macro MCR1 is satisfied in this case, the processor 11a reads the first macro MCR1 for approach out of the macro storage area MCM of RAM 11c and places the macro after the abovementioned NC data (B) stored in the NC data storage area NCM.

(5) Thereafter, the cross-hair intersection $P_c$ of cursor 17b is moved along the cutting path (S1 → S2 → S3 → S4). Thus, the positions of a series of points on the path are read successively at a predetermined sampling pitch, NC data for feeding the tool in a cutting mode along line segments connecting the points are created as in the prior art and the data are stored in the NC data storage area NCM of RAM 11c.

(6) The first switch SW1 is turned off at the end of the operations for creating the NC data which move the tool along the cutting path.

(7) The processor 11a checks whether a macro call condition has been satisfied by manipulating a switch. Since the condition for calling the second macro MCR2 is satisfied in this case, the processor 11a reads the second macro MCR2 for retraction out of the macro storage area MCM of RAM 11c and places the macro after the abovementioned cutting NC data stored in the NC data storage area NCM.

(8) Processing from (2) onward is repeated until all of the NC data are created.

⟨Advantages of the Invention⟩

According to the present invention as described above, a plurality of macros specifying motion (e.g. approach motion and retraction motion) along an axis (Z axis) which does not enable an input with a tablet are registered in advance, a predetermined macro is called by manipulating a switch for point entry, and NC data for approach and for retraction are created by using the macro. It is therefore unnecessary to enter NC data for approach and for retraction from a keyboard item by item, thereby simplifying the NC data creation operation, shortening the NC data creation time and eliminating data input errors. The invention is particularly effective in cases where identical approach and retraction motions are repeated a number of times to machine a single part.

Though the foregoing description deals with a case where the invention is applied to milling machining, the invention can also be applied to machining such as drilling. In such case, a macro having NC data for drilling is registered in advance, a prescribed area is designated and a prescribed switch is turned on to create positioning data, the macro is called and drilling NC data are placed after these positioning NC data to create a drilling program.

Further, the foregoing description relates to a case where a predetermined macro is called by turning a single switch on or off. However, it is of course permissible to provide two or more switches, register a number of macros and call a prescribed micro based on whether each of the switches is on or off.

## Claims

1. An NC data creation method in which a prescribed area of a menu (17c) fixed to a tablet surface (17a) of a tablet device (17) is designated by using a coordinate designator (17c), thereby specifying whether data such as rapid-traverse data, linear cutting data and circular arc cutting data are to be created, turning on a switch (SW1,SW2) mounted on the coordinate designator (17c) to enter coordinate values of points on a drawing designated by the coordinate designator (17c), creating prescribed NC data for any of rapid traverse, linear cutting and circular arc cutting by using said entered coordinate values, and registering a plurality of macros in advance for creating different sets of NC data, characterised by:
storing a correlation between each macro and conditions for calling the macro, one of the conditions being operation of the switch (SW1,SW2), calling a prescribed macro by operating said switch when other conditions have been satisfied, and creating NC data including motion along a Z axis such as approach NC data and retraction NC data by using the prescribed macro.

2. An NC data creation method according to claim 1, characterised by calling a macro for creating approach NC data when said switch is turned from off to on, and calling a macro for creating retraction NC data when said switch is turned from on to off.

3. An NC data creation method according to claim 1 or 2, characterised by calling a macro for creating approach NC data by operating the switch when a transition is made from a positioning operation to a cutting operation, and calling a macro for creating retraction NC data by operating the switch when a transition is made from the cutting operation to the positioning operation.

## Patentansprüche

1. Verfahren zur Erstellung von NC-Daten, bei dem ein entsprechendes Feld eines Menüs (17c), das auf der Tablettoberfläche (17a) einer Tablettvorrichtung (17) angebracht ist, mit Hilfe eines Koordinatenbezeichners (17b) bezeichnet wird, wobei angegeben wird, ob Daten, wie zum Beispiel Daten für Schnellgang, geradliniges Schneiden und Kreisbogenschneiden, erstellt werden sollen, ein an dem Koordinatenbezeichner (17b) angebrachter Schalter (SW1, SW2) eingeschaltet wird, um Koordinatenwerte von Punkten auf einer Zeichnung, die von dem Koordinatenbezeichner (17b) bezeichnet werden, einzugeben, entsprechende NC-Daten für Schnellgang, geradliniges Schneiden und Kreisbogenschneiden durch Verwendung der genannten eingegebenen Koordinatenwerte erstellt werden, und eine Vielzahl von Makros im voraus registriert werden, um verschiedene Gruppen von NC-Daten zu erstellen,
gekennzeichnet durch
die Speicherung einer Korrelation zwischen jedem Makro und den Bedingungen für den Aufruf des Makros, wobei eine der Bedingungen die Betätigung des Schalters (SW1, SW2) ist, das Aufrufen eines entsprechenden Makros durch Betätigung des genannten Schalters, wenn andere Bedingungen erfüllt sind, und die Erstellung von NC-Daten - einschließlich derjenigen für eine Bewegung entlang einer Z-Achse, wie zum Beispiel NC-Daten für das Einfahren und NC-Daten für das Zurückfahren,- durch Verwendung des entsprechenden Makros.

2. Verfahren zur Erstellung von NC-Daten nach Anspruch 1, gekennzeichnet durch das Aufrufen eines Makros zur Erstellung von NC-Daten für das Einfahren, wenn der genannte Schalter von 'Aus' auf 'An' gestellt wird, und das Aufrufen eines Makros zur Erstellung von NC-Daten für das Zurückfahren, wenn der genannte Schalter von 'An' auf 'Aus' gestellt wird.

3. Verfahren zur Erstellung von NC-Daten nach Anspruch 1 oder 2, gekennzeichnet durch das Aufrufen eines Makros zur Erstellung von NC-Daten für das Einfahren durch Betätigung des Schalters, wenn von einem Positionierungsvorgang zu einem Schneidevorgang übergegangen wird, und das Aufrufen eines Makros zur Erstellung von NC-Daten für das Zurückfahren durch Betätigung des Schalters, wenn der Übergang von dem Schneidevorgang zu dem Positionierungsvorgang erfolgt.

## Revendications

1. Un procédé de création de données NC dans lequel une zone prescrite d'un menu (17c) fixée à une surface de tablette (17a) d'un dispositif à tablette (17) est indiqué en utilisant un indicateur de coordonnées (17c), spécifiant de ce fait si une donnée telle qu'une donnée à parcours rapide, une donnée à coupe linéaire, et une donnée à coupe en arc circulaire sont à créer, en mettant sur marche un commutateur (SW1, SW2) monté sur l'indicateur de coordonnées (17c) pour entrer des valeurs de coordonnées de points d'un dessin indiqué par l'indicateur de coordonnées (17c), en créant une donnée NC prescrite pour chaque coupe de parcours rapide, linéaire et en arc de cercle en utilisant lesdites valeurs entrées de coordonnées, et en enregistrant une pluralité de macro-instructions en avance pour créer différents jeux de données NC, caractérisé par

le stockage d'une corrélation entre chaque macro-instruction et les conditions pour appeler la macro-instruction, l'une des conditions étant l'actionnement du commutateur (SW1, SW2), l'appel d'une macro-instruction prescrite en actionnant ledit commutateur lorsque d'autres conditions ont été satisfaites et la création de données NC incluant un mouvement le long d'un axe Z telles que des données NC d'approche et des données NC de rétraction en utilisant la macro-instruction prescrite.

2. Un procédé de création de données NC selon la revendication 1, caractérisé par l'appel d'une macro-instruction pour la création de données d'approche NC lorsque ledit commutateur est passé d'arrêt à marche et l'appel d'une macro-instruction pour créer des données de rétraction NC lorsque ledit commutateur est tourné de marche à arrêt ;

3. Un procédé de création de données NC selon la revendication 1 ou 2, caractérisé par l'appel d'une macro-instruction pour la création de données d'approche NC en actionnant le commutateur lorsqu'une transition est faite d'une opération de positionnement à une opération de coupe et l'appel d'une macro-instruction pour la création de données de rétraction NC en actionnant le commutateur lorsqu'une transition est faite de l'opération de coupe à l'opération de positionnement.

# Fig. I

EP 0 194 316 B1

# Fig. 2

*13* Graphic Display Unit

*15* Printer

*11* Apparatus Main Body

*16*

*14*

*17* Tablet

*17a* Tablet Surface

*17c* Menu

*17b* Cursor

*12* Keyboard

# Fig. 3

Pc

RFP

*17b* Cursor

CSB

SW1 First Switch

SW2 Second Switch

CNT

CBL

# Fig. 4

EP 0 194 316 B1

# Fig.5

```
                    ┌─────────┐
                    │  Start  │
                    └─────────┘
                         │
                         ▼              (a)
                ┌──────────────────┐
                │  Enter Sistem    │
                │       Program    │
                └──────────────────┘
                         │            (b)
                ┌──────────────────┐
                │  Register Macro  │
                └──────────────────┘
                         │            (c)
                ┌──────────────────┐
                │ Store Macro Call │
                │      Condition   │
                └──────────────────┘
                         │
  ┌──────────────────────┤
  │                       │            (d)
  │              ╱─────────────────╲  YES
  │             ╱ Switch Operated? ╲──────────┐
  │             ╲                   ╱          │
  │              ╲─────────────────╱           │
  │                      │ NO                  │
  │                      │                     ▼                  (f)
  │                      │       NO   ╱─────────────────────╲
  │          ┌───────────┼───────────  Macro Call Condition  ╲
  │          │           │           ╲     Satisfied ?       ╱
  │          │           │            ╲─────────────────────╱
  │          │           │                     │ YES
  │          ▼           │                     │
  │  ┌──────────────────┐│          (e)        │
  │  │ Continue NC Data ││                     │
  │  │Creation Processing                      │
  │  └──────────────────┘                      │
  │          │                                 │
  │          │                                 ▼                (g)
  │          │                        ┌──────────────────┐
  │          │                        │    Call Macro    │
  │          │                        └──────────────────┘
  │          │                                 │
  │          │                                 ▼                (h)
  │          │                        ┌──────────────────┐
  │          │                        │  Create NC Data  │
  │          │                        │  Based On Macro  │
  │          │                        └──────────────────┘
  │          │                                 │
  └──────────┴─────────────────────────────────┘
```

# Fig. 6